# EUROPÄISCHE PATENTSCHRIFT

(11) **EP 1 812 743 B1**
(45) Veröffentlichungstag und Bekanntmachung des Hinweises auf die Patenterteilung: **10.09.2008**
(21) Anmeldenummer: 05802310.2
(22) Anmeldetag: 08.10.2005
(51) Int. Cl.: F16L 33/22, F16L 13/14

(54) **ROHRVERBINDUNG MIT VERBESSERTER FESTIGKEIT**
PIPE CONNECTION WITH AN IMPROVED STRENGTH
RACCORDS DE TUYAUTERIE A STABILITE AMELIOREE

(30) Priorität: 17.11.2004 DE 102004055537
(43) Veröffentlichungstag der Anmeldung: 01.08.2007
(73) Patentinhaber: Vulkan Lokring- Rohrverbindungen GmbH & Co. KG, 44653 Herne (DE)
(72) Erfinder: SCHWALM, Dieter, 33813 Oerlinghausen (DE)
(74) Vertreter: Behrendt, Arne
(86) Internationale Anmeldenummer: PCT/EP2005/010864
(87) Internationale Veröffentlichungsnummer: WO 2006/053609

(56) Entgegenhaltungen:
- - -
- DE-A1- 4 412 615
- US-A- 4 026 006
- US-A- 4 061 367
- US-A- 4 911 484

## Beschreibung

Die vorliegende Erfindung betrifft eine Rohrverbindung mit einem metallischen Klemmring, der zum Verbinden zweier ineinander gestreckter, metallischer Rohre axial auf das außen liegende Rohr aufschiebbar ist, wobei der Klemmring an seiner Innenseite
a) einen sich entgegen der Aufschubrichtung radial konisch verengenden Eingangsabschnitt aufweist,
b) einen sich entgegen der Aufschubrichtung radial konisch verengenden Endabschnitt aufweist, der in Montagestellung ein radiales Zusammendrücken der Rohre bewirkt, und
c) einen zwischen Eingangsabschnitt und Endabschnitt angeordneten Mittenabschnitt aufweist,

Eine derartige Rohrverbindung ist aus der deutschen Patentschrift DE 38 37 359 C2 bekannt.

Ferner ist eine solche Rohzverbindung aus der deutchen Offenlegungschrift DE-A-44 12 615 bekannt, wobei die Rohzverbindung die Merkmale des Oberbegriffs des Anspruchs 1 und daher auch einen konisch ausgebildeten Mittelabschnitt aufweist.

Rohrverbindungen der vorliegenden Art dienen dazu, zwei metallische Rohre miteinander mechanisch zu verbinden und diese Verbindung zugleich abzudichten. Die Rohre werden dazu ineinander gesteckt und durch axiales Aufschieben des Klemmrings miteinander verspannt. Damit die Rohre ineinander gesteckt werden können, muss das außenliegende Rohr einen größeren Innendurchmesser aufweisen, als der Außendurchmesser des inneren Rohrs. Grundsätzlich ist es daher möglich, entweder zwei Rohre mit unterschiedlichem Nenndurchmesser zu fügen, oder zwei Rohre mit demselben Durchmesser, wobei der Endabschnitt eines Rohres im Bereich der Verbindung aufgeweitet werden muss.

Die vorbekannten Rohrverbindungen nach den zitierten Schriften haben sich in den meisten Anwendungsfällen hervorragend bewährt. Es hat sich allerdings gezeigt, dass in zwei bestimmten Anwendungsfällen die mechanische Festigkeit der vorbekannten Verbindung verbesserungsbedürftig ist: zum einen ist die Torsions-und Zugfestigkeit der Verbindung zweier Rohre aus einem weicheren, weniger elastischen Metall wie beispielsweise eine weiche Aluminiumlegierung unbefriedigend, zum anderen ist bei stählernen Rohren, die mit einem hohen Innendruck beaufschlagt sind, eine Verringerung der Haltekräfte zu beobachten.

Der vorliegenden Erfindung liegt daher die Aufgabe zugrunde, die Rohrverbindung der eingangs genannten Art so weiter zu bilden, dass selbst Rohre aus weicheren Werkstoffen oder Rohre mit hohem Innendruck sicher und dauerfest gefügt und gedichtet werden können.

Gelöst wird diese Aufgabe durch die Merkmale des Anspruchs 1.

Die konische Ausgestaltung des Mittenabschnitts kann in zweierlei Weise erfolgen, nämlich so, dass sich der Mittenabschnitt entgegen der Aufschubrichtung verengt oder erweitert. Die erste Gestaltvariante, die nicht im Rahmen der Erfindung liegt, bietet sich insbesondere dann an, wenn es gilt, weiche Werkstoffe zu fügen. Die Verformung der Rohre erfolgt über einen längeren Bereich, so dass sich eine harmonischere Spannungsverteilung in der Verbindung ausbildet. Die Verformung erfolgt nicht mehr allein punktuell und plastisch im Bereich des Endabschnitt, sondern auch elastisch im Bereich des Mittenabschnitts, so dass die Rohre dort kraftschlüssig gefügt werden.

Insbesondere ist der konische Mittenabschnitt so zu bemessen, dass die Rohre im Übergangsbereich zwischen Mittenabschnitt und Endabschnitt im plastischen Bereich verformt werden. So wird ein nahtloser Übergang vom elastischen bis in den plastischen Bereich der Rohre geschaffen.

Die zweite, erfindungsgemäβe Gestaltvariante, die durch einen sich entgegen der Aufschubsrichtung erweiternden Mittenabschnitt gekennzeichnet ist, bietet sich insbesondere zum Fügen von innendruckbelasteten Rohren höherer Elastizität an. Die Aufweitung entlastet die Verbindung im Bereich des Mittenabschnitts und führt zu einem Rückfederungseffekt, der bei einer anschließenden erhöhten Belastung am Endabschnitt eine wellenförmige Verankerung der beiden Rohre bewirkt. Darüber hinaus werden die Montagekräfte insbesondere beim Fügen von Rohrmaterialien mit hohen Festigkeiten und größeren Wandstärken gesenkt.

Der Eingangsabschnitt des Klemmrings kann in vorteilhafterweise in zwei auf einander folgende, sich in Aufschubrichtung radial konisch verengende Teilabschnitte unterteilt werden, wobei der mündungsseitig angeordnete, erste Teilabschnitt eine größere Steigung aufzuweisen hat als der zweite Teilabschnitt. Durch diese Maßnahme wird das Aufschieben des Klemmrings deutlich erleichtert.

An seiner Außenseite, im Bereich des Mittenabschnitts kann der Klemmring vorteilhafterweise mit einer umlaufenden Einschnürung versehen werden. Diese begünstigt eine elastische Verformung des Rings im Bereich des Mittenabschnitts, was zu einer höheren Festigkeit der Verbindung führt.

Die vorliegende Neuerung soll nun anhand von Ausführungsbeispielen näher erläutert werden. Es zeigen hierfür:
- Fig. 1:: Klemmring, erste, nicht im Rahmen der Erfindung liegende Gestaltvariante;
- Fig. 2:: Rohrverbindung mit aufgeweitetem Rohr und Klemmring aus Figur 1;
- Fig. 3:: Rohrverbindung mit Rohren von unterschiedlichem Durchmesser und Klemmring aus Figur 1;
- Fig. 4:: Klemmring, zweite, erfindungsgemäße Gestaltvariante;
- Fig. 5:: Rohrverbindung mit aufgeweitetem Rohr und Klemmring aus Figur 4;
- Fig. 6:: Rohrverbindung mit Rohren von unterschiedlichem Durchmesser mit Klemmring aus Figur 4.

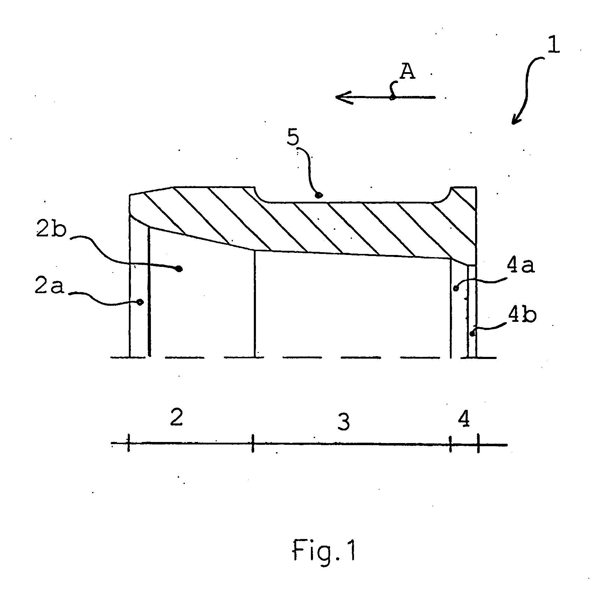

Eine erste, nicht erfindungsgemäße Gestaltvariante des Klemmrings 1 zeigt Figur 1 im Längsschnitt. An seiner Innenseite weist der Klemmring 1 drei funktionale Hauptabschnitte auf, die entlang seiner Längsachse entgegen der Aufschubrichtung A aufeinander folgen. Mündungsseitig angeordnet ist ein Eingangsabschnitt 2, an den sich ein Mittenabschnitt 3 abschließt. Innenkontur wird an ihrem Ende von einem Endabschnitt 4 abgeschlossen.

Der Eingangsabschnitt 2 setzt sich wiederum aus zwei Teilabschnitten zusammen, einem mündungsseitig angeordneten ersten Teilabschnitt 2a und einem darauf folgenden zweiten Teilabschnitt 2b. Beide Teilabschnitte 2a, 2b verengen sich konisch, wobei der erste Teilabschnitt 2a eine größere Steigung aufweist als der zweite Teilabschnitt 2b.

Der Mittenabschnitt 3 verengt sich ebenfalls konisch. Die Steigung ist jedoch deutlich geringer als die der Eingangsabschnitte 2a, 2b. Auch der Endabschnitt 4 zweigeteilt, nämlich in einem sich radial konisch verengenden Reduzierabschnitt 4a und einem vergleichsweise kurzen Zylinderabschnitt 4b. Die hohe Steigung des Reduzierabschnitts 4a dient dazu, die Rohre in Montagestellung radial zusammen zu drücken, teilweise bis in den plastischen Bereich hinein. Der zylindrische Abschnitt 4b prägt dieser Einschnürung seinen Innendurchmesser auf. Hier entsteht bei gefügter Verbindung die Dichtung. An seiner Außenseite ist der Klemmring 1 mit einer umlaufenden Einschnürung versehen, die sich im Bereich des Mittenabschnitts 3 erstreckt.

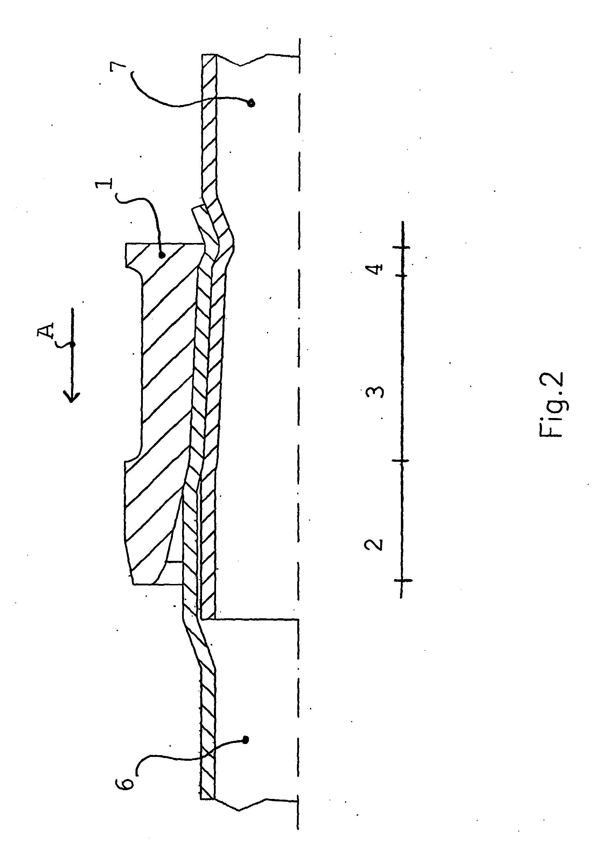

Figur 2 zeigt eine Rohrverbindung zweier Rohre 6, 7 mit dem Klemmring 1 der ersten Gestaltvariante in Montagestellung. Der Klemmring 1 ist in Aufschubrichtung A auf das äußere Rohr 6 aufgeschoben und bewirkt ein radiales Zusammendrücken der Rohre 6, 7. Im Bereich des Mittenabschnitts 3 werden die Rohre 6, 7 im elastischen Bereich verformt, die im Grenzbereich zum Endabschnitt 4 in eine plastische Verformung übergeht. Im Endabschnitt 4 selbst herrscht eine vollständige, plastische Verformung vor, die zu einem echten Formschluss zwischen den Rohren 6 und 7 führt. Die Verbindung ist mithin unlösbar. Die in Figur 2 dargestellten Rohre 6 und 7 weisen denselben Innendurchmesser auf. Damit sie im Bereich des Klemmrings 1 ineinandersteckbar sind, ist das Rohr 6 dort zuvor aufgeweitet worden.

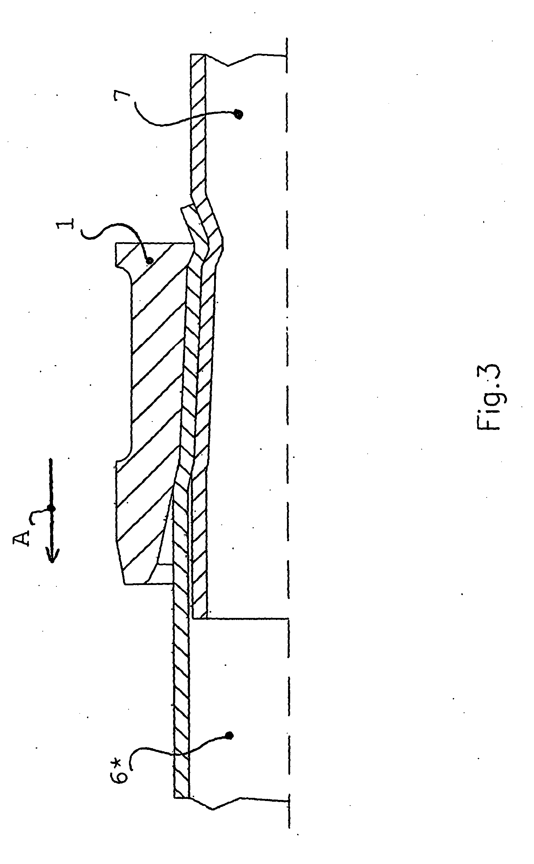

Gleichwohl ist es möglich, zwei Rohre 6*, 7 zu fügen, die einen unterschiedlichen Innendurchmesser haben. So hat dass in Figur 3 dargestellte äußere Rohr 6* einen deutlich größeren Durchmesser als das innere Rohr 7, so dass es nicht eigens aufgeweitet werden muss. Das oben beschriebene Verformungsverhalten ist jedoch gleich.

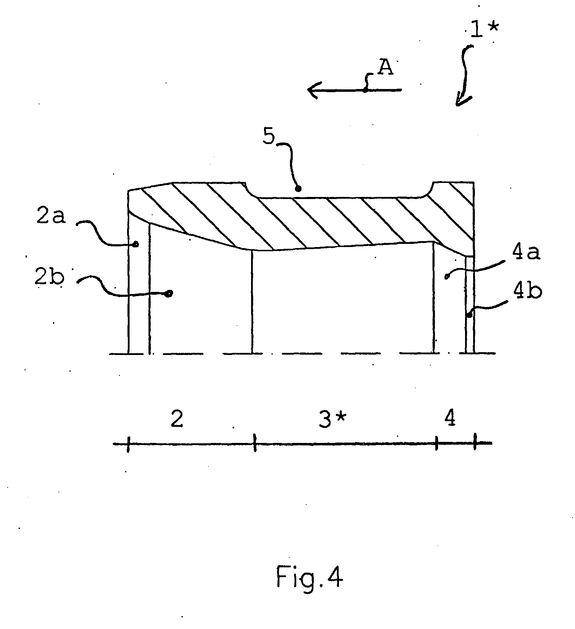

Figur 4 zeigt die erfindungsgemäße zweite Gestaltvariante des Klemmrings 1*. Diese unterscheidet sich von der ersten Gestaltvariante 1 durch den Mittenabschnitt 3*, der sich hier entgegen der Aufschubrichtung A konisch erweitert. Beim Aufschieben des Klemmrings 1* werden die Rohr zunächst über den Eingangsabschnitt 2 gestaucht und unmittelbar danach im Mittenabschnitt 3* wieder entlastet, um schließlich im Endabschnitt 4 erneut reduziert zu werden. In Montagestellung bildet sich somit ein etwa wellenförmiges Belastungsprofil aus, welches sich auf die Festigkeit von insbesondere Hochdruck-Rohrverbindungen positiv auswirkt.

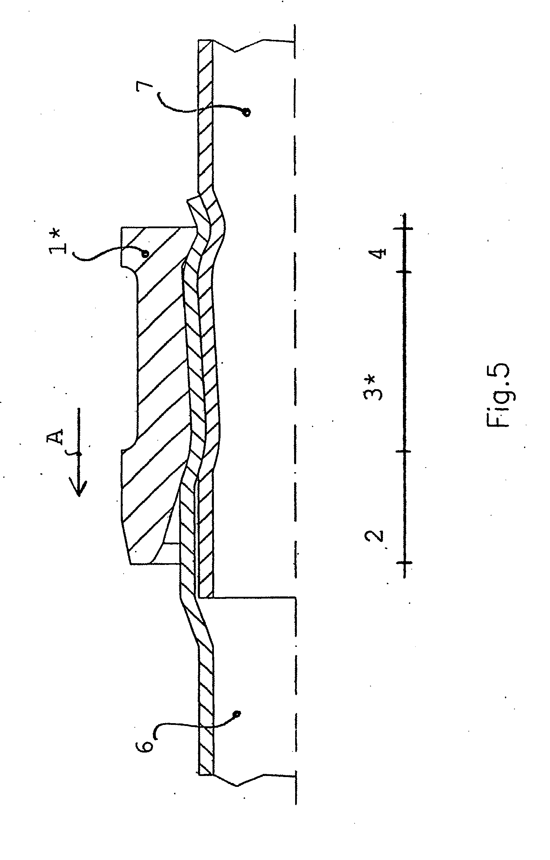

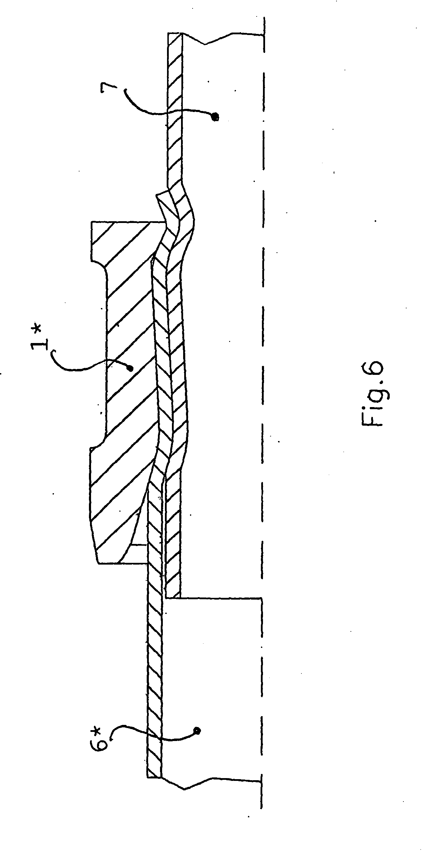

Die wellenartige Verformung der Rohre 6, 6* und 7* ist in den Figuren 5 und 6 deutlich zu erkennen. Auch hier werden die Rohre im Mittenbereich 3* weitestgehend elastisch verformt, währenddessen im Endbereich 4 plastische Verformung vorherrscht.

Auch der Klemmring 1* mit sich erweiterndem Mittenabschnitt 3* eignet sich zum Fügen von Rohren gleichen Durchmessers 6, 7 von denen das äußere Rohr 6 aufgeweitet ist (vgl. Figur 5) als auch zum Fügen von Rohren mit unter schiedlichem Durchmesser 6* und 7; vgl. Figur 6.

## Patentansprüche

1. Rohrverbindung mit einem metallischen Klemmring (1*), der zum Verbinden zweier ineinander gesteckter, metallischer Rohre (6, 6*, 7) axial auf das außen liegende Rohr (6, 6*) aufschiebbar ist, wobei der Klemmring (1*) an seiner Innenseite
a) einen sich entgegen der Aufschubrichtung (A) radial konisch verengenden Eingangsabschnitt (2) aufweist,
b) einen sich entgegen der Aufschubrichtung (A) radial konisch verengenden Endabschnitt (4) aufweist, der in Montagestellung ein radiales Zusammendrücken der Rohre (6, 6*, 7) bewirkt, und
c) einen zwischen Eingangsabschnitt (2) und Endabschnitt (4) angeordneten, konisch ausgebildeten Mittenabschnitt (3*) aufweist,
**dadurch gekennzeichnet,**
d) **dass** sich der Mittenabschnitt (3*) entgegen der Aufschubrichtung (A) radial konisch erweitert.

2. Rohrverbindung nach Anspruch 1, **dadurch gekennzeichnet, dass** der Eingangsabschnitt (2) wiederum in zwei aufeinander folgende, sich entgegen der Aufschubrichtung radial konisch verengende Teilabschnitte (2a, 2b) unterteilt ist, wobei der mündungsseitig angeordnete, erste Teilabschnitt (2a) eine größere Steigung aufweist als der zweite Teilabschnitt (2b).

3. Rohrverbindung nach Anspruch 1 oder 2, **dadurch gekennzeichnet, dass** der Klemmring (1*) an seiner Außenseite im Bereich des Mittenabschnitts (3*) eine umlaufende Einschnürung (5) aufweist.

## Claims

1. A pipe connection having a metallic clamping ring (1*) which, in order to connect two metallic pipes (6, 6*, 7) which are inserted one inside the other, can be mounted axially on the outer pipe (6, 6*), wherein the inside of the clamping ring (1*) exhibits:
a) a front section (2) which tapers radially inwardly in the direction opposite to the mounting direction (A);
b) an end section (4) which tapers radially inwardly in the direction opposite to the mounting direction (A), which causes radial compression of the pipes (6, 6*, 7) in the mounted position; and
c) a tapered central section (3*) arranged between the front section (2) and the end section (4);
**characterized in that**
d) the central section (3*) tapers radially outwardly in the direction opposite to the mounting direction (A).

2. A pipe connection according to claim 1, **characterized in that** the front section (2) is further divided into two successive part sections (2a, 2b) which taper radially inwardly in the direction opposite to the mounting direction, wherein the first part section (2a) which is arranged on the opening side has a greater inclination than the second part section (2b).

3. A pipe connection according to claim 1 or claim 2, **characterized in that** the clamping ring (1*) has a circumferential constriction (5) on its outer side in the region of the central section (3*).

## Revendications

1. Raccord avec une bague de serrage métallique (1*) qui, pour raccorder deux tuyaux métalliques (6,6*,7) emboîtés l'un dans l'autre, peut être poussée axialement sur le tuyau (6,6*) situé à l'extérieur, où la bague de serrage (1*) présente à son côté intérieur
a) une section d'entrée (2) retrécissant d'une manière radiale conique contre la direction de poussée (A),
b) présente une section d'extrémité (4) retrécissant d'une manière radiale conique contre la direction de poussée (A), qui provoque en position de montage une compression radiale des tuyaux (6,6*,7), et
c) présente une section médiane de forme conique (3*), disposée entre la section d'entrée (2) et la section d'extrémité (4),
**caractérisé**
d) **en ce que** la section médiane (3*) s'élargit d'une manière radiale conique contre la direction de poussée (A).

2. Raccord selon la revendication 1, **caractérisé en ce que** la section d'entrée (2) est divisée à nouveau en deux sections partielles successives (2a,2b), retrécissant d'une manière radiale conique contre la direction de poussée, où la première section partielle (2a) disposée côté embouchure présente un pas plus grand que la deuxième section partielle (2b).

3. Raccord selon la revendication 1 ou 2, **caractérisé en ce que** la bague de serrage (1*) présente à son côté extérieur, dans la zone de la section médiane (3*), un étranglement (5) s'étendant tout autour.
